# EUROPEAN PATENT APPLICATION

(11) **EP 0 972 727 A1**
(43) Date of publication of application: **19.01.2000**
(21) Application number: 98112975.2
(22) Date of filing: 13.07.1998
(51) Int. Cl.: B65D 90/06, F16L 59/02, F17C 3/04

(54) **Propylene polymer foam for thermal insulation of containers**

(71) Applicant: Dow Deutschland Inc., 21683 Stade (DE)
(72) Inventor: Barry, Russel Paul, 77855 Gamshurst (DE); Weir, Kevin William, 77836 Greffern (DE)
(74) Representative: Patentanwälte Sternagel & Fleischer

(57) **Abstract**

The invention relates to the use of a flexible polypropylene foam, comprising greater than 50 percent by weight of propylene monomeric units, for thermally insulating containers, especially temperature-controlled bulk tank transportation containers like for example IMO containers. Preferably the propylene polymer foam is a strand foam made of a resin comprising at least 20 percent of a high melt strength polypropylene and up to 20 percent of a homopolymer or copolymer of ethylene, each based on the total weight of the resin.

## Description

The present invention relates to the use of propylene polymer foam for thermal insulation of containers, especially bulk tank transportation containers. Bulk tank transportation containers are large vessels and usually classified as tank containers, swap tanks, road tanks, trailer tanks, and rail tank cars.

Safe and efficient transportation of bulk liquids over long distances is a main concern of any kind of industry. Traditionally, bulk liquids are transported in drums holding several hundred liters. However, for movements crossing seas, large marine tank containers often with capacities of up to 26,000 liters or more have become an attractive alternative to the traditional transportation in drums. These tank containers are designed to prevent accidental damage and tampering compared to other methods of carrying bulk liquids, such as drums. As a result the risk of cargo loss or contamination is significantly reduced. Moreover, tank containers deliver time and labor savings. Since they are handled by using standard equipment, transfer at ports and terminals is simple and switching between road, rail and sea straightforward. The use of tank containers offers a safe and cost-effective method of moving bulk liquids, while using a recyclable resource. Tank containers carry a far greater payload for the equivalent space and shipping cost compared with a rectangular standard box container filled with palletized drums. Swap tanks, road tanks, tank trailers and rail tank cars have similar benefits for land movements across and between countries, offering more cost effective and safe movements.

A tank container is basically a pressure vessel mounted in a frame. The pressure vessel has a cylindrical shape with its ends rounded. Its shell, generally denoted as "tank shell", is usually made of stainless steel. The function of the frame is to support and protect the tank as well as to facilitate the stowage, securement and handling by standard ISO (International Standards Organisation) container equipment. The overall dimensions and corner castings conform to ISO container recommendations. When properly handled the frame is designed to cope with the stresses of a fully loaded tank.

Other types of bulk tank transportation containers also comprise a mainly cylindrical vessel, optionally surrounded by an outer cladding.

Tank containers, as well as other bulk tank transportation containers, conform to the advisory and mandatory requirements of internationally recognized codes, in particular, tank containers must adhere to the codes of the International Maritime Organisation (IMO). For that reason, the above-described tank containers are generally denoted as "IMO tanks" or "IMO tank containers".

In order to protect the carried liquids from undesirable fluctuations in temperature most bulk tank transportation containers are insulated. As some of the transported products must be heated during loading, unloading and during transportation (e. g. molten chocolate) bulk tank transportation containers also comprise a heating system such as electrical or steam heating. From an economical standpoint it is reasonable to design many bulk tank transportation containers with a heating system. This gives the tank the flexibility to carry both cargoes that require heating during loading, discharge and/or transportation, and cargoes which do not require heat input. The more costly alternative would be to own or lease both heatable and non-heatable bulk tank transportation containers. This alternative would also reduce the vessel utilization rate. For IMO tank containers, the most efficient and widespread heating system is steam heating usually consisting of a series of steam channels on the outside of the lower half of the tank.

In case of IMO tank containers the insulation is arranged around the pressure vessel and covered by an outer cladding usually made of glass reinforced plastic resin or marine grade aluminum. The insulation of steam heatable IMO tank containers must, as a matter of fact, at least withstand the operating temperatures of the pressurized steam. Generally, temperature resistance of up to 130°C is required. It is pointed to the fact that even for the insulation of non-heated tanks, e.g. tanks carrying refrigerated liquids, a temperature resistant insulation material is desirable as steam cleaning might then be employed with these tanks. Insulation materials fulfilling the temperature resistance requirement and which are used in the art include expanded polyurethane, expanded polyisocyanurate, mineral wool and glass wool, as well as combinations of said expanded polymers with mineral wool and/or glass wool. For other types of bulk tank transportation containers, expanded polystyrene is also used as insulation material, but should be used only for moderately heated (up to 70°C) tanks due to the lower temperature resistance of EPS foam.

Expanded polyurethane and expanded polyisocyanurate are both rigid foams which cannot be bent around the cylindrical shell of the pressure vessel. In order to be adapted to the cylindrical shape, these rigid foams must be cut in single blocks which are then arranged on the shell of the pressure vessel and held in place by e.g. tightening straps or adhesive. Alternatively, rigid foams are fabricated to enable the fitting to the curved surfaces. In many cases this involves fabricating a curved section from a larger block, which is highly wasteful and expensive. These curved segments are fragile leading to an additional waste and cost. Another technique it to cut grooves into flat rigid foam boards to bend the boards. Again this is costly, the boards are fragile and breakage occurs leading to further wastage. Furthermore, the fabrication of the rigid foams and later handling and installation generates significant levels of irritant dust. Injected polyurethane technology used to insulate tanks has other problems. The foam sticks to the inner tank and outer cladding, making maintenance of the tank more difficult. Problems can arise too due to the differential expansion of the tank shell and outside cladding, particularly when the tank is being heated and/or cleaned.

Polyurethane foam does not have sufficient heat resistance alone and hence, a costly double layer comprising a heat resistant lagging of mineral wool or glass wool and a second lagging of high compressive strength polyurethane foam blocks is often used. In case the insulation material is expanded polyisocyanurate it is often used as 1-piece being grooved or it is fabricated into curved segments fitting the cylindrical shell of the pressure vessel exactly. Both rigid foam alternatives are very expensive implying the afore-mentioned drawbacks. Moreover, the friable nature of the expanded foams can lead to extensive wear from vibrations caused during transportation.

Compression resistance of the insulation material is an other important feature in order to avoid damage of the outer cladding when for instance personnel walk thereon during maintenance. An insulation made solely of mineral wool or glass wool is disadvantageous since mineral wool and glass wool both lack the required compression resistance and impact resistance and do not maintain the outer circular shape of the container in the course of time. In view of the insufficient compression resistance of mineral wool or glass wool, it is necessary to employ strips of high compression strength foam plastic material to support the cladding.

Although the expected lifetime of bulk tank transportation containers is about 20 years they are re-clad after about 10 years including removal and renewal of the insulation. The replacement of the insulation material is necessary since all types of insulation materials currently used in bulk tank transportation containers can absorb significant amounts of water resulting in a undesirable increase in weight and reduction of thermal insulation properties. The entry of water and other liquids into the insulation will always occur even if the outer cladding is undamaged, e.g. from water vapor transmission and rain or sea water, or from cargo spills around the inlets, outlets, and man hole covers, which can all pass between the cladding joints. Water will also get in via corroded steam lines and from condensation on the inner tank shell. Hence, a fully waterproof seal of the insulation from the environment by the cladding is not practicable. Removing the used water-saturated insulation material(s) is an unpleasant and difficult job since the material(s) can deteriorate and become very brittle over the years and partly adhere to the shell of bulk tank transportation containers. The insulation material(s) must be disposed of, as recycling of thermosetting polymers and inorganic material is difficult.
Additional to low water absorbency it would also be desirable to have an insulation material which would allow drainage of any water away from the vessel surface.

It is thus the object of the present invention to provide a single layer of recyclable material for thermal insulation of containers, especially bulk tank transportation containers, that is easy to apply and remove avoiding the generation of dust and that is heat resistant up to 130°C.

The object is met by the use of a flexible propylene polymer foam, comprising greater than 50 percent by weight of propylene monomeric units, for thermally insulating containers.

The invention also relates to a propylene polymer foam preferably used which is a propylene polymer strand foam made of a resin comprising at least 20 percent of a high melt strength polypropylene and up to 20 percent of a homopolymer or copolymer of ethylene, each based on the total weight of the resin.

The flexible propylene polymer foam preferably has the shape of a plank that can be readily wrapped around round transportation containers. Within the meaning of the present invention the term "plank" refers to foam planks having a thickness of at least 10 mm. Preferably the thickness ranges from 10 to 200 mm, more preferably from 20 to 100 mm. For the insulation of IMO tanks the propylene polymer foam plank preferably has a thickness of about 50 mm. The desired thickness may also be reached by molding together several thinner foam sheets.

If used for IMO tank containers the propylene polymer foam plank preferably has a width of about 550 mm, said width fitting between the strengthening rings of a standard pressure vessel of an IMO tank container. The length of the sheet depends on the number of single sheets that are wrapped around the cylindrical pressure vessel and arranged side by side to cover the whole circumference. Three sheets have proved to be advantageous resulting in a length of each sheet of about 2750 mm. Longer and shorter sheets are, of course, also possible but are more difficult to handle.

The propylene polymer foam of the present invention can withstand temperatures of up to 130°C; in preferred embodiments heat resistance of up to 150°C can be reached depending on the composition of the resin from which the propylene polymer foam is made. The heat resistance properties make the propylene polymer foam especially suitable for the insulation of most temperature-controlled bulk tank transportation containers. Nevertheless, the propylene polymer foam is also useful for insulation of non-temperature-controlled containers.

Flexibility is another important property of the present propylene polymer foam. The propylene polymer foam is flexible enough so that a sheet with a thickness of 50 mm can be bent to fit the curvature of a standard IMO tank pressure vessel having a diameter of about 2.4 m.

The propylene polymer foam according to the present invention is thermoplastic resulting in at least two advantageous properties. Firstly, the foam is heat or hot air weldable which means that single planks of propylene polymer foam may be welded together to enhance the overall insulation performance (thermal bridges are avoided) and to avert the entry of water or spilled cargo onto the steel tank shell. Secondly, used propylene polymer foam, e.g. from scrap containers, may easily be recycled reducing the amount of waste material.

Besides recycling the propylene polymer foam, it is sometimes possible to reuse the complete foam planks from bulk tank transportation containers which have been removed for maintenance of the pressure vessel.

The propylene polymer foam according to the present invention has a low friability and can be handled and worked without the generation of irritating dust.

The propylene polymer foam has the compression resistance required for the insulation of bulk tank transportation containers which means that personnel can walk on top of the outer cladding arranged around the insulation. It provides form and impact resistance and, as the propylene polymer foam has a temperature resistance exceeding 130°C it can be used as the single insulation material in one lagging process. Thus, the need for high compression strength material strips to support the cladding is eliminated.

Propylene polymers have a very low chloride ion content, preferably not more than 25 ppm. More preferably, chloride ion contents of less than 10 ppm should be used when the insulation is in contact with stainless steel tank shells. Stainless steel is susceptible to corrosion and stress cracking caused by chloride ions. As propylene polymers have a lower chloride content than polyurethane, polyisocyanurate, mineral wool, and glass wool typically used as insulation, the working life of the pressure vessel of a bulk tank transportation container can be extended by using propylene polymer foam for insulation.

The propylene polymer foam may be prepared according to any known process for the production of expanded or extruded polyolefin polymers. Typically extrusion processes are generally characterized by feeding, into an extruder, a propylene polymer resin optionally adding a nucleating agent, melting and plasticizing the propylene polymer resin thereafter feeding a volatile foaming agent, uniformly mixing the materials, and then extruding the mixture to a low pressure zone while cooling it and forming a propylene polymer foam product. Corresponding processes are described in US-A-5,527,573, US-A-5,567,744, US-A-5,348,795.

Preferably, the propylene polymer foam is prepared by the strand foam process (also denoted as "coalesced foam process" or "coalesced strand foam process") which is disclosed in US-A-4,824,720, as well as in the above-cited patents. Said method provides a foam structure comprising a plurality of coalesced extruded strands or profiles by extrusion foaming of a molten thermoplastic composition utilizing a die containing a multiplicity of orifices. The orifices are arranged such that the contact between adjacent streams of the molten extrudate occurs during the foaming process and the contacting surfaces adhere to one another with sufficient adhesion to result in a unitary structure. The individual strands of coalesced propylene polymer foam should remain adhered into a unitary structure to prevent strand delamination under stress encountered in preparing, shaping, and using the foam.

Another suitable process for making a foam of the present invention is an accumulating process as described in US-A-4,323,528.

Although the extrusion process, especially the strand foam process is preferred other methods of preparing the propylene polymer foam may be employed, including the bead foam process comprising impregnating propylene polymer resin beads with a blowing agent, preblowing said beads and finally molding them into the desired shape e.g. a sheet or plank (for example described in WO 96/10600), and a lamination process comprising gluing sheets into a sandwich structure as, for example, described in DE 44 21 016 A1.

The term "propylene polymer" within the meaning of the present invention includes propylene homopolymers (polypropylene) and copolymers of propylene and copolymerizable ethylenically unsaturated comonomers. The propylene polymer material may further include non-propylenic polymers. The propylene polymer material may be comprised solely of one or more propylene homopolymers, one or more propylene copolymers, a blend of one or more of each of propylene homopolymers and copolymers, or blends of any of the foregoing with a non-propylenic polymer. Regardless of composition, the propylene polymer material comprises at least greater than 50 and preferably at least 80 weight percent of propylene monomeric units.

Suitable monoethylenically unsaturated comonomers include olefins, vinylacetate, methylacrylate, ethylacrylate, methyl methacrylate, acrylic acid, itaconic acid, maleic acid, maleic anhydride, and the like. The propylene copolymer preferably comprises about 20 percent or less by weight of the ethylenically unsaturated comonomer.

Suitable non-propylenic polymers incorporatable in the propylene polymer material include high, medium, low, and linear density polyethylenes, polybutene-1, ethylene-acrylic acid polymer, ethylenevinyl acetate copolymer, ethylene-propylene rubbery styrene-butadiene, rubbery ethylene-ethyl acrylate copolymer, ionomer and the like, as well as other copolymers comprising ethylene.

Particularly useful propylene copolymers are those copolymers of propylene and one or more non-propylenic olefins. Propylene copolymers include random and block copolymers of propylene and an olefin selected from the group consisting of ethylene, C₄-C₁₀ 1-olefins, and C₄-C₁₀ dienes. Propylene copolymers also include random terpolymers of propylene and 1-olefins selected from the group consisting of ethylene and C₄-C₈ 1-olefins. In terpolymers having both ethylene and C₄-C₈ 1-olefins, the ethylene content is preferably 20 percent or less by weight. The C₄-C₁₀ 1-olefins include the linear and branched C₄-C₁₀ 1-olefins such as, for example, 1-butene, isobutylene, 1-pentene, 3-methyl-1-butene, 1-hexene, 3,4-dimethyl-1-butene, 1-heptene, 3-methyl-1-hexene, and the like. Examples of C₄-C₁₀ dienes include 1,3-butadiene, 1,4-pentadiene, isoprene, 1,5-hexadiene, 2,3-dimethyl-1,3-hexadiene, and the like.

Also, as used herein, the propylene polymer material preferably has a melt flow rate of between 0.05 and 50 and more preferably between 0.1 and 10 according to ASTM D1238 Condition L.

The preferred propylene polymer resins for the present invention are those polypropylene resins which are branched or lightly cross-linked polymer materials. Branching (or light cross-linking) may be obtained by those methods generally known in the art, such as chemical or irradiation branching/light cross-linking. One such resin which is prepared as a branched/lightly cross-linked polypropylene resin prior to using the polypropylene resin to prepare a finished polypropylene resin product and the method of preparing such a polypropylene resin is described in US-A-4,916,198. Another method to prepare branched/lightly cross-linked polypropylene resin is to introduce chemical compounds into the extruder, along with a polypropylene resin and allow the branching/lightly cross-linking reaction to take place in the extruder. US-A-4,714,716 illustrates this method.

Suitable branching/crosslinking agents for use in extrusion reactions have been found to include azido and vinyl functional silanes, organic peroxides and multifunctional vinyl monomers.

When the propylene polymer foam is prepared by the strand foam process it is preferred to use at least 20 weight percent of a high melt strength (HMS) polypropylene which is a branched polypropylene and up to 20 weight percent of a homopolymer or copolymer of ethylene. The following blend of three different polymers is especially preferred: a high viscous polypropylene homopolymer used for blow molding, preferably having a melt flow index of from 0.2 to 0.3, an HMS polypropylene, and a homopolymer or copolymer of ethylene (e.g. ethylene-octene copolymer or ethylene-propylene copolymer) to enhance adhesion between the extruded strands. The blend preferably comprises 40 to 60 weight percent of the high viscous polypropylene, 20 to 50 weight percent of the HMS polypropylene, and 1 to 20 weight percent of the homopolymer or copolymer of ethylene. It is also possible to add various additives such as inorganic fillers, pigments, antioxidants, acid scavengers, ultraviolet absorbers, flame retardants, processing aids, extrusion aids, and the like. In a preferred embodiment one or more antioxidants are used in an amount of from 0.1 to 3 parts by weight per hundred parts by weight of the polymer resin. 0.1 to 1 parts by weight are even more preferred and about 0.6 parts by weight are most preferred. The use of antioxidants is desirable to avoid embrittlement of the propylene polymer with time at higher temperatures. The preferred antioxidants are phenol-type or phosphite-type antioxidants or a combination of both.

In addition, a nucleating agent may be added in order to control the size of foam cells. Preferred nucleating agents include inorganic substances such as calcium carbonate, talc, clay, titanium oxide, silica, barium sulfate, diatomaceous earth, mixtures of citric acid and sodium bicarbonate, and the like, talc being most preferred. The amount of nucleating agent employed may range from 0.01 to 5 parts by weight per hundred parts by weight of the polymer resin. The preferred range is from 0.1 to 3 parts by weight.

Suitable blowing agents useful in making the foams of the present invention include volatile organic blowing agents, inorganic blowing agents, and chemical blowing agents. Organic blowing agents include aliphatic hydrocarbons having 1-9 carbon atoms and halogenated aliphatic hydrocarbons, having 1-4 carbon atoms. Aliphatic hydrocarbons include methane, ethane, propane, n-butane, isobutane, n-pentane, isopentane, neopentane, and the like. Among halogenated hydrocarbons, fluorinated hydrocarbons are preferred. Examples of fluorinated hydrocarbon include methyl fluoride, perfluoromethane, ethyl fluoride, 1,1-difluoroethane, 1,1,1-trifluoroethane (HFC-143a), 1,1,1,2-tetrafluoro-ethane (HFC-134a), pentafluoroethane, perfluoroethane, 2,2-difluoropropane, 1,1,1-trifluoropropane, perfluoropropane, perfluorobutane, perfluorocyclobutane. Partially halogenated chlorocarbons and chlorofluorocarbons for use in this invention include methyl chloride, methylene chloride, ethyl chloride, 1,1,1-trichloroethane, 1,1-dichloro-1-fluoroethane (HCFC-141b), 1-chloro-1,1-difluoroethane (HCFC-142b), 1,1-dichloro-2,2,2-trifluoroethane (HCFC-123) and 1-chloro-1,2,2,2-tetrafluoroethane (HCFC-124). Inorganic blowing agents include carbon dioxide, nitrogen, argon, water, air, nitrogen, and helium. Chemical blowing agents include azodicarbonamide, azodiisobutyro-nitrile, benzene-sul fonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, and trihydrazino triazine. For the strand foam process isobutane, carbon dioxide or water or combinations thereof are the preferred blowing agents.

The amount of blowing agent incorporated into the polymer melt to make a foam-forming polymer gel is from 0.2 to 5.0 preferably from 0.5 to 3.0, and most preferably from 1.0 to 2.50 moles per kg polymer.

The present foam may be closed cell or open cell. Preferably, the present foam is from 10 to 80 and most preferably from 10 to 60 percent open cell according to ASTM D2856-A. Some open cell content is preferred in the present foam because an open cell foam is more dimensionally stable than a corresponding closed cell foam. The open cell content also increases flexibility and reduces cure time.

The present foam has preferably the density of from 9 to 65 kg/m³, more preferably from 9 to 48 kg/m³, especially preferably from 9 to 32 kg/m³ and most preferably from 9 to 24 kg/m³. The lighter propylene polymer foams are especially useful for the insulation of transportation containers like IMO tanks as light insulation material can save a significant amount on the tare weight of the container. The low weight of the most preferred propylene polymer foam is a major advantage over currently used insulation materials for IMO tanks such as mineral wool (density of 35 to 80 kg/m³) and polyurethane/polyisocyanurate (density of 35 to 45 kg/m³).

The propylene polymer foam preferably has an average cell size of from 0.05 to 3.0 mm, more preferably from 0.1 to 1.5 mm and most preferably from 0.2 to 0.8 mm according to ASTM D3576. Small cells are preferred since they increase the insulation performance of the foam and decrease the water absorption of the foam. The low water absorption properties are a further significant advantage over currently used insulation materials for bulk tank transportation containers such as mineral wool, glass wool, polyurethane, and polyisocyanurate which all absorb undesirable levels of water. Low water absorption means that the foam will maintain its weight and insulation performance through the vessels useful life. The replacement of the foam after a certain period of time will thus become unnecessary.

The water absorption of the propylene polymer foam is preferably not more than 1.5 percent by volume.

The thermal conductivity (λ) of the propylene polymer foam is preferably not greater than 0.040 W/mK and more preferably not greater than 0.037 W/mK when measured at a mean temperature of 10°C.

Propylene polymer foam planks prepared according to the strand foam process consist of individual coalesced strands, each strand being surrounded by a skin. This skin confers low water absorbency to the propylene polymer foam irrespective of its open cell content and cell size. The strands further result in elongated grooves arranged parallel on the surface of the plank in direction of the strands. If the propylene polymer foam plank is bent along the direction of the strands and wrapped around the cylindrical shell of a pressure vessel of a bulk tank transportation container, the grooves will serve to drain any water from the vessel (e.g. water resulting from condensation on the vessel of refrigerated tank containers). Propylene polymer strand foam planks bent perpendicular to the strand direction and used lengthwise will not have said draining effect.

Although the propylene polymer foam of the present invention is well adapted to insulate IMO tanks it can be used for thermal insulation of any container, preferably temperature-controlled container due to the heat resistance of the propylene polymer foam or any transportation container due to the low weight of the propylene polymer foam, and more preferably any temperature-controlled bulk tank transportation containers for road, rail and ship, e.g. swap tanks (tank containers similar to IMO tank containers but with a larger pressure vessel protruding beyond the ISO frame), road tanks; large cylindrical vessels fixed to a truck chassis, trailer tanks; large cylindrical vessels mounted on a truck trailer chassis, and rail tank cars; large cylindrical vessels mounted on rolling stock.

Using the propylene polymer foam for thermal insulation of IMO tank containers planks with the desired shape (550 x 2750 x 50 mm) are first cut by hand to create recesses for inlets, outlets, steam pipes etc. Three planks (or more or less if smaller or larger planks are used) are circumferentially applied side by side to the shell of the pressure vessel between two reinforcing ribs. The planks are held by tightening straps, clips, adhesives or any other suitable fastening means and the adjacent foam edges can be welded together using hot air. Finally, the outer cladding is applied to the tank.

The present invention also encompasses an IMO tank container insulated by the propylene polymer foam as defined above. The transportation container comprises (a) a pressure vessel, preferably made of stainless steal, (b) an insulation layer of propylene polymer foam, comprising greater than 50 percent by weight of propylene monomeric units, arranged around at least part of the pressure vessel, (c) an outer cladding, preferably made of aluminum and/or glass reinforced plastic resin, covering the pressure vessel and insulation respectively, and (d) a frame in which the pressure vessel is mounted to support and protect the pressure vessel as well as to facilitate the handling by standard ISO container equipment.

The invention should now be further illustrated by an example.

### Example 1

A strand foam plank according to the invention is prepared. The equipment employed a single screw extruder which fed the melt into a mixer and then to a cooler system and finally to a die. An opening is provided in the mixer through which blowing agent is introduced. At the end of the cooling zone, there is attached a multi-orifice die with 1 mm diameter orifices arranged in rows and columns in an equilateral triangular pattern. The orifices are each spaced-apart by 4.1 mm and their total number was 1200 (10 rows and 120 columns).

The propylene polymer resin used was a blend of Polypropylene 6823 from Montel (48 percent based on the total weight of the resin), HMS polypropylene Profax® 814 from Montel (40 percent based on the total weight of the resin) and polyolefin plastomer Affinity® PL1880 from The Dow Chemical Company. The polymers, 0.6 pph (parts by weight per hundred parts by weight of the polymer resin) of a hindered phenol-type antioxidant (Irganox® 1010 from Ciba-Geigy), 0.1 pph of a phosphite-type antioxidant (Ultranox® from G. E. Plastics), 0.64 pph talc and 0.6 pph calcium stearate as nucleating agents were fed to the extruder at a total rate of approximately 90.7 kg/h.

The temperature maintained in the extruder zones were 130°C at the feeding zone, 200°C at the melting zone, 230°C at the metering zone and 210°C at the mixing zone. The extrudate was cooled to approximately 151°C in the cooling zone prior to foaming.

The blowing agent was isobutane (10 pph) and was injected into the injection port of the mixer.

A stable foam body of coalesced strands with excellent strand-to-strand adhesion was produced. At a die pressure of 4.1 MPa, the foam showed no sign of prefoaming. The foam had an approximately rectangular cross-section of 50 mm in thickness and 550 mm in width.

### Example 2

Example 1 was repeated except that the temperature of the cooling zone was set to 158°C and 12 parts of isobutane were used. The lower temperature of the cooling zone reduced the open cell content.

The properties of the foam are given in the Table below.

**TABLE**

| | Example 1 | Example 2 |
|---|---|---|
| Density (kg/m³) | 24.65 | 19 |
| Cell Size (mm Dynasco) | | |
| Horizontal | 0.33 | 0.48 |
| Vertical | 0.44 | 0.49 |
| Extrusion | 0.54 | 0.48 |
| Open Cell Content(%) | 58.1 | 16.2 |
| Vertical Compressive Strength (kPa, ASTM 3575) | | |
| 10% Compression | 37 | 39 |
| 25% compression | 59 | 59 |
| 50% compression | 91 | 109 |
| λ at 10°C (mW/mK)DIN 52616 | 36.4 | 36.5 |
| λ (wet) 10°C (mW/mK) " | 36.4 | nd |
| Water absorption after 7 days (Vol%) DIN 53433 | 1.16 | 0.24 |
| nd = not determined. | | |

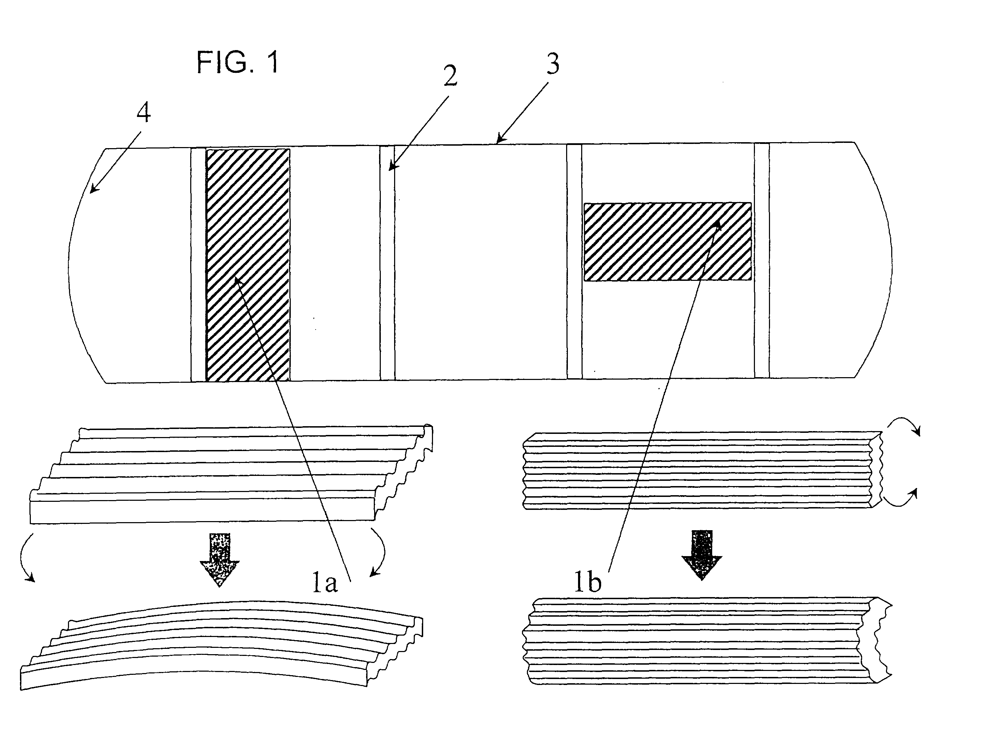

Three foam planks (1a) with a length of approximately 2750 mm were mounted on the cylindrical part of the pressure vessel (tank shell(3)) of an IMO tank container as shown on the left hand side of Fig. 1. The foam planks (1a) are bent parallel to the strands and their width of typically 550 mm is adapted so that 3 planks fit side by side in between two stiffening rings (2). On the right hand side of Fig. 1 a number of foam planks (1b) having a width of 550 mm and a length of 1650 mm are applied to the tank shell, bent perpendicular to the direction of the strands.

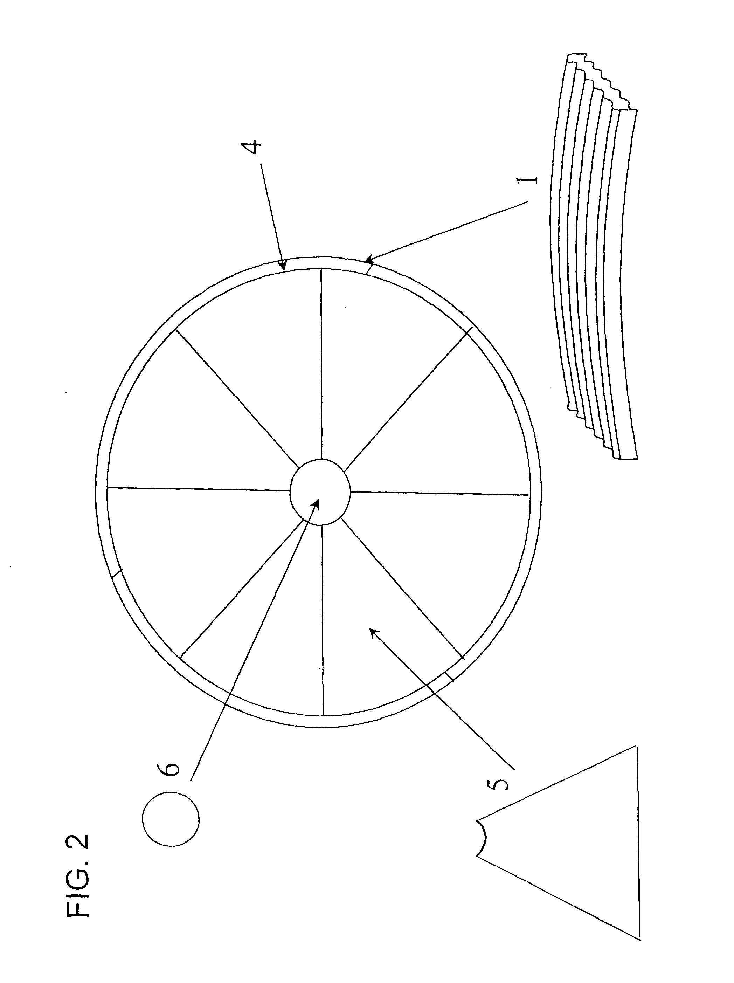

For the insulation of the tank head (4) the foam planks (1) are cut into the shape of triangular foam segments (5) with a curve, cut at one corner to allow tight fitting of the central foam round (6). Eight (or any other number depending on the size of the segments) of these foam segments (5) are mounted on the tank head (4) as shown in Fig. 2. The top of the rounded tank head (4) is covered by a foam round (6).

## Claims

1. Use of a flexible polypropylene foam, comprising greater than 50 percent by weight of propylene monomeric units, for thermally insulating containers.

2. The use according to claim 1,
characterized in that
the container is a temperature-controlled bulk tank transportation container.

3. The use according to claims 1 or 2,
characterized in that
the propylene polymer foam has the shape of a plank with a thickness of at least 10 mm.

4. The use according to any of claims 1 to 3
characterized in that
the propylene polymer foam is 10 to 60 percent open cell.

5. The use according to any of claims 1 to 4
characterized in that
the propylene polymer foam has the density of from 9 to 32 kg/m³.

6. The use according to any of claims 1 to 5,
characterized in that
the propylene polymer foam has a thermal conductivity value of not greater than 0.040 W/mK when measured at a mean temperature of 10°C.

7. The use according to any of claim 6,
characterized in that
the propylene polymer foam has a thermal conductivity value of not greater than 0.037 W/mK when measured at a mean temperature of 10°C.

8. The use according to any of claims 1 to 5,
characterized in that
the propylene polymer foam is obtainable by the strand foam process.

9. The use according to claim 6
characterized in that
the propylene polymer foam is made of a resin comprising at least 20 percent of a high melt strength polypropylene and up to 20 percent of a homopolymer or copolymer of ethylene, each based on the total weight of the resin.

10. A transportation container comprising
(a) a pressure vessel,
(b) an insulation layer of propylene polymer foam, comprising greater than 50 percent by weight of propylene monomeric units, arranged around at least part of the pressure vessel,
(c) an outer cladding covering the pressure vessel and insulation, respectively, and
(d) a frame in which the pressure vessel is mounted to support and protect the pressure vessel as well as to facilitate the handling by standard ISO container equipment.

11. The transportation container according to claim 10,
characterized in that
the insulation layer has a thickness of about 50 mm.

12. A propylene polymer strand foam made of a resin comprising at least 20 percent of a high melt strength polypropylene and up to 20 percent of a homopolymer or copolymer of ethylene, each based on the total weight of the resin.

13. The propylene polymer strand foam according to claim 12 made of a resin comprising 40 to 60 percent of a high viscous polypropylene homopolymer used for blow molding and having a melt flow index of from 0.2 to 0.3, 20 to 50 percent of a high melt strength polypropylene, and 1 to 20 percent of a homopolymer or copolymer of ethylene, each based on the total weight of the resin.

14. The propylene polymer strand foam of claims 12 or 13,
characterized in that
the foam is 10 to 60 percent open cell and has a density of from 9 to 32 kg/m³.
